(19) **Europäisches Patentamt**

**European Patent Office**

**Office européen des brevets**

(11) Veröffentlichungsnummer: **0 201 924**

**A2**

(12) # EUROPÄISCHE PATENTANMELDUNG

(21) Anmeldenummer: **86106580.3**

(22) Anmeldetag: **14.05.86**

(51) Int. Cl.4: **C02F 3/06 , C02F 3/30 , C02F 3/10**

(30) Priorität: **15.05.85 DE 3517600**
**08.06.85 DE 3520652**

(43) Veröffentlichungstag der Anmeldung:
**20.11.86 Patentblatt 86/47**

(84) Benannte Vertragsstaaten:
**AT BE CH DE FR GB IT LI LU NL SE**

(71) Anmelder: **Water Engineering and Plant Construction GtA reg.Trust**
**Post Box 183**
**FL-9490 Vaduz(LI)**

(72) Erfinder: **Zimmer, Erich**
**61-63 Aba Johnston St. P.O. Box 2065**
**Ikeja(NG)**

(74) Vertreter: **Patentanwälte Dipl.-Ing. F.W. Möll**
**Dipl.-Ing. H.Ch. Bitterich**
**Langstrasse 5 Postfach 2080**
**D-6740 Landau(DE)**

(54) **Verfahren und Vorrichtung zur Reinigung von Abwässern.**

(57) Eine Kläranlage zur Reinigung organischer Abwässer enthält einen Behälter (1) mit Zulauf (10), Ablauf (12) und Abzug (11) für den Überschußschlamm. Im Behälter (1), der mit möglichst minimaler Oberfläche pro Volumen ausgebildet ist, ist ein in Zonen unterteilter Tauchkörper (2.1, 2.2, 2.3), bestehend aus einer Vielzahl von Einzelkörpern als Schüttgut, angeordnet. Im Bereich des trichterartigen Behälterbodens (9) ist eine Begasungsanlage (3.2) angeordnet. Der Behälterinhalt (6) wird über eine Leitung (4.1, 4.2) mit eingebauter Pumpe (5) in Gegenrichtung zu den aufsteigenden Gasblasen der Begasungsanlage (3.2) umgepumpt. Ein Sondenrohr (20) mit darin verschieblicher Meßsonde (21) erlaubt eine Kontrolle der in den einzelnen Tauchkörperzonen (2.1, 2.2, 2.3) ablaufenden Prozesse. Durch geeignete Abstimmung von Gasmenge, Strömungsgeschwindigkeit des Abwassers und Strömungswiderstand des Tauchkörpers können in den einzelnen Zonen (2.1, 2.2, 2.3) des Tauchkörpers (2) unterschiedliche, z. B. aerobe, fakultative und/oder anaerobe Bedingungen eingestellt werden.

Fig. 3

## Verfahren und Vorrichtung zur Reinigung von Abwässern

Die Erfindung betrifft ein Verfahren zur aeroben, fakultativen und/oder anaeroben Reinigung organischer Abwässer durch Heranführen von Abwasser und gegebenenfalls Sauerstoff enthaltendem Gas an geeignete Bakterien, die auf einer Aufwuchsfläche im Belebungsteil einer Kläranlage fixiert sind sowie Vorrichtungen zur Durchführung des Verfahrens.

Die wirtschaftliche und technische Leistungsfähigkeit einer Kläranlage hängt im wesentlichen von drei Kriterien ab, und zwar von der erreichbaren Biomassekonzentration im Belebungsteil, dem erreichbaren Sauerstoff-Nutzungsgrad der Belüftung und der Optimierung der Temperatur und weiterer Milieufaktoren, die Reaktionskinetik und Abbau günstig beeinflussen.

Die Konzentration der Biomasse stößt in BelebtschlämmAnlagen bei Werten von ca. 6 bis 8 kg Trockensubstanz pro Kubikmeter Belebungsbecken (kgTS/m³)an ihre Grenze, da sich die Biomasse unter natürlichen Bedingungen nicht weiter konzentrieren läßt. Versucht man trotzdem, die Schlammsubstanz zu vermehren, so füllt sie das gesamte Belebungsbeckenvolumen aus, so daß schließlich der Abwasser-Durchsatz nicht mehr gewährleistet ist.

Befindet sich zuviel Schlammsubstanz im Belebungsbecken, so gelangen unerwünscht große Mengen Schlamm in das Nachklärbecken. Dadurch geht der Wirkungsgrad der Belebtschlamm-Anlagen um 50 % und mehr zurück.

Es hat sich herausgestellt, daß eine Erhöhung der Belebtschlammkonzentration im Belebungsbecken mit Hilfe von in die Becken eingebauten Tauchkörperelementen möglich ist.

Beim sogenannten Bio-Zwei-Schlamm-Verfahren werden in das Belebungsbecken über die Belüftungselemente Tropfkörperblöcke eingebaut. Auf deren Flächen wächst sessiler Schlamm, der sich mit dem in suspendierter Form gewachsenen Belebtschlamm mischt und zu einer Verbesserung des Schlammindexes führt. Der sessile Schlamm auf den Tropfkörperblöcken führt auch zu der erwünschten Erhöhung der Belebtschlammkonzentration unabhängig von der Schlammrückführung aus dem Nachklärbecken. Die Trockenmasse des Belebtschlammes konnte auf 3,5 kg pro Kubikmeter gesteigert werden. Das Tropfkörpervolumen ist aus konstruktiven Gründen auf ca. 10 bis 20 % des BelüftungsbeckenVolumens begrenzt.

Ein ähnliches System ist als Biocomp-Verfahren bekannt geworden und wurde in der japanischen Stadt Osaka erprobt. Als Trägermaterial wurden spezielle Netzscheiben benutzt, die die Sauerstoffversorgung des Biofilms begünstigen. Die Aufenthaltszeit des Abwassers konnte von 6 bis 8 Stunden auf 3 bis 4,5 Stunden verkürzt werden. Die entsprechende Raumbelastung wurde von 0,22 kg $BSB_5$ /$(m^3 \times d)$ auf 0,40 kg $BSB_5$ / $(m^3 \times d)$ erhöht, ohne daß eine Verschlechterung der Ablaufwerte beobachtet wurde.

Ein weiteres Verfahren wurde an der Universität Stuttgart entwickelt und erstmals auf der Kläranlage "Obere Düte" der Georgsmarien-Hütte eingesetzt. Zielrichtung war eine Intensivierung der Nitrifikation durch den Einsatz von Biofilmreaktoren in der letzten Kaskade. Auch bei dieser Anlage wird das Gemisch aus Belebtschlamm und Abwasser mit Hilfe des durch die Belüftung gebildeten Auftriebs durch den aus Tonkugeln gebildeten Tropfkörper transportiert. Das Nitrifikationsvermögen des Belebungsbeckens konnte durch den Einsatz dieses Tropfkörpers auf das drei-bis zehnfache gesteigert werden.

Bekannt ist auch das linpor-Verfahren, bei dem in bis zu 40 % des Beckenvolumens Kunststoffschaumwürfel als Aufwuchsmaterial für die sessilen Organismen eingebracht werden. Die Belebtschlammkonzentration konnte dadurch auf 6 bis 7 kg $TS/m^3$ angehoben werden.

Eine Abwandlung wurde von der britischen Firma Simon & Hartley entwickelt. Mit Hilfe von schwimmenden Schaumstoffwürfeln -Kantenlänge 1 cm -wird die Belebtschlammkonzentration im Becken nach eigenen Angaben auf 9 bis 15 kg $TS/m^3$ erhöht und somit ein hohes Schlammalter erzeugt. Die Schaumstoffwürfel werden mit Hilfe eines Transportbandes fortlaufend zu zwei Walzen geführt, die den Schlamm auspressen und ihn als Überschußschlamm aus dem System entfernen. Betriebsergebnisse sind allerdings bisher nicht bekannt geworden.

Bei der aeroben Abwasserreinigung werden Bakterien eingesetzt, die mit Hilfe von Sauerstoff die im Abwasser enthaltenen Kohlenstoff-und/oder Stickstoffverbindungen abbauen. Der Sauerstoff-Nutzungsgrad in den derzeit betriebenen Belebungsanlagen liegt je nach Gasblasengröße zwischen 5 und 11 %. Bei Tauchkörper-Anlagen mit natürlicher Belüftung liegt der Nutzungsgrad bei ca. 5 %, bei künstlicher Luftzufuhr noch niedriger.

Verantwortlich für diese schlechten Nutzungsgrade sind die kurze Verweilzeit der Luftblasen im Abwasser, wodurch die Sauerstoff-Austauschphase zwischen Luft und Biomasse sehr kurz ist, sowie die relativ geringe Biomasse-Konzentration.

Zur Verbesserung des Sauerstoff-Nutzungsgrades sind ebenfalls eine Reihe von Anlagen und Verfahren bekannt geworden. Als Beispiel sei hier genannt das Deep-shaft-Verfahren der Firma ICI. Bei diesem Verfahren ist der Belebungsraum als Schacht mit konzentrisch verlegtem Innenrohr mit 50 bis 200 m Tiefe ausgeführt. Im Betrieb ist das Abwasser in ständigem Kreislauf, wobei es durch das Innenrohr nach unten gedrückt und gleichzeitig mit Luft angereichert wird. Bis es aus der Tiefe von 50 bis 200 m wieder an die Oberfläche gelangt, ist die eingetragene Luft völlig verbraucht. Nachteilig sind jedoch der extrem tiefe Schacht sowie das Verdichten der Prozeßluft gegen den hydrostatischen Druck der Flüssigkeitssäule.

Eine weitere wichtige Einflußgröße ist die Temperatur im Belebungsraum. Durch einen Temperaturanstieg von beispielsweise 20 auf 35 °C kann ein Beschleunigungsfaktor von 3 erreicht werden.

Als erste Versuchsanlage, die diese Wirkung einer Temperaturerhöhung bestätigt hat, muß der von H. Brauer entwickelte Hubstrahlreaktor angesehen werden. Bei diesem besteht der Belebungsraum aus einem schlanken senkrechten Zylinder mit einer Hubstange, an der in bestimmten Abständen gelochte Scheiben zur Verbesserung des Stoffaustausches angeordnet sind. Die Versuchstemperatur wurde allerdings durch äußere Beheizung eingestellt. Die biochemische Umsetzung soll 35 bis 70 mal höher sein als in konventionellen Klärsystemen.

Bei kommerziell betriebenen Kläranlagen wird weniger auf eine extrem hohe Abbauleistung als vielmehr auf eine hohe Wirtschaftlichkeit der Anlage geachtet, wobei Wirtschaftlichkeit in etwa definiert werden kann als das Verhältnis von Abbauleistung zu der Summe aus Baukosten und Betriebskosten. Außerdem muß ein störungsfreier Betrieb unter allen vorkommenden Umgebungsbedingungen gewährleistet sein.

Der vorliegenden Erfindung liegt die Aufgabe zugrunde, ein Verfahren der eingangs genannten Art anzugeben, welches unter Kombination des Belebtschlamm-Verfahrens mit dem Tauchkörper-Verfahren eine erhöhte Konzentration und Aktivität sowie eine verbesserte Nutzung der gesamten Biomasse durch Erhöhung der Temperatur, permanenten Kontakt mit Nährstoffen und Gas sowie gegebenenfalls eine optimale Sauerstoff-Nutzung durch große Verweilzeit des eingetragenen Gases ermöglicht.

Diese Aufgabe wird dadurch gelöst, daß Abwasser und Gas im Bereich der Aufwuchsfläche einander entgegenströmen.

Damit ergeben sich die Vorteile, daß der in den Behälter eingesetzte Tauchkörper nicht nur als Aufwuchsfläche für den Biorasen, sondern gleichzeitig als Speicher für Sauerstoff und Nährstoffe, als Bremse zur Verringerung der Steiggeschwindigkeit der Luftblasen sowie als Wärmestaukörper wirkt. Außerdem verringert der Tauchkörper die Neigung der Gasblasen, sich zu größeren Blasen zu vereinigen. Die besonders wirksame Verlängerung der Verweilzeit der Gasblasen im Abwasser wird jedoch dadurch erreicht, daß das Abwasser den Gasblasen entgegenströmt. Nährstoffe und Sauerstoff werden an alle Flächen des Biorasens kontinuierlich herangetragen, so daß der Stoffwechsel der Bakterien gleichmäßig und unter optimalen Bedingungen verlaufen kann.

Bei korrekter Abstimmung der Strömungsgeschwindigkeiten läßt sich auch bei relativ flachen Behältern die Verweilzeit so sehr vergrößern, daß der gesamte Sauerstoffgehalt an das Abwasser bzw. an die biologisch aktiven Bakterien übergeht.

Wie sich gezeigt hat, kann der Abwasserdurchsatz durch den Tauchkörper bevorzugt zwischen 2 und 20 tw (tw = Trockenwetterabfluß) gehalten werden. Bei herkömmlichen Tropfkörperanlagen geht die Wirtschaftlichkeit schon unterhalb 2 tw verloren. Auch soll die Verweilzeit des Abwassers im Belebungsteil der Kläranlage kleiner als 1,5, vorzugsweise kleiner als 1,0 Stunden gehalten werden. Das erfindungsgemäße Verfahren vereinigt somit einen hohen Grad der Abwasserklärung mit einer hohen Wirtschaftlichkeit, die nicht zuletzt daraus resultiert, daß das Verfahren erheblich kleinere Behälter oder Becken erfordert als die herkömmlichen Verfahren.

Versetzt man das Abwasser im Behälter in Rotation, vorzugsweise durch seitlich gerichtete Gasaustrittsöffnungen der Begasungsanlage, so steigen die Gasblasen spiralförmig nach oben. Ihre Verweilzeit im Abwasser wird weiter erhöht.

Eine Verstopfung des Tauchkörpers wird durch ein kontinuierliches Abspülen der nachwachsenden Anteile des Biorasens erreicht. Durch die Strömung werden gleichzeitig Belebtschlamm und Abwasser gemischt und homogenisiert und ein Absetzen von Schlamm am Boden des Behälters verhindert.

Ein weiterer Vorteil besteht darin, daß durch die Anordnung des Tauchkörpers unterhalb des Abwasserspiegels und das Hochpumpen des Behälterinhaltes vom Boden nur bis zum Abwasserspiegel kaum geodätische Höhe überwunden werden muß; die Pumpe muß lediglich die Strömungswiderstände in Tauchkörper und Umwälzleitung überwinden, benötigt also wenig Energie.

Gemäß einer vorteilhaften Weiterbildung der Erfindung läßt sich erreichen, daß der obere Teil des Tauchkörpers keinen Sauerstoff mehr erhält, so daß dort fakultative bzw. anaerobe Bedingungen herrschen, und zwar zur Denitrifikation der Stickstoff-und/oder Phosphat-Verbin dungen im Abwasser. Dadurch können in einem einzigen Klärbecken bzw. -behälter alle organischen Schadstoffe abgebaut werden.

Vorzugsweise wird bei der Verfahrensführung dafür gesorgt, daß das Abwasser durch die beim biologischen Abbau entstehende Wärme auf vorzugsweise 35 bis 40 °C aufgeheizt wird. Es handelt sich dabei um das obere Ende des mesophilen Bereichs. Es ist zwar bekannt, daß in diesem Temperaturbereich die Abbauleistung der Bakterien besonders hoch ist, jedoch wird dieser Effekt bei den derzeit üblichen Kläranlagen nicht ausgenützt.

Die Dimensionierung des Behälters erfolgt also auf geringen Wärmeverlust. Dies kann darin bestehen, daß der Behälter mit einem Deckel abdeckbar ist, daß die Wände wärmegedämmt werden oder besonders vorteilhaft, da ohne zusätzlichen Aufwand machbar, daß das Verhältnis von wärmeabgebender Behälteroberfläche zu Behältervolumen minimiert wird. Die Konzentration der durch den biologischen Abbau entstehenden Wärme im Behälter wird auch durch den eingesetzten Tauchkörper verbessert, dessen Masse als Wärmespeicher und -isolator wirkt.

Vorzugsweise besteht der Tauchkörper aus einer Vielzahl von Einzelkörpern als Schüttgut, wobei die einzelnen Körper eine große Oberfläche und/oder offene Hohlräume besitzen und zwischen Gittern oder Lochblechen eingeschlossen sind. Die Größe der Einzelkörper, bei denen es sich vorzugsweise um Abschnitte von rohrförmigen Kunststoffprofilen handelt, die vorzugsweise - schwimmfähig sind, ist so abzustimmen, daß einerseits ausreichende Mengen von Abwasser mit ausreichender Strömungsgeschwindigkeit durch den Tauchkörper hindurchgeleitet werden, daß aber andererseits der Sauerstoff möglichst lange im Bereich des Tauchkörpers gehalten wird, um eine gute Sauerstoffausbeute und Wärmedämmung zu bekommen. Mit der Dichte des Füllkörpermaterials wird der Strömungswiderstand reguliert. Gleichzeitig halten die Hohlräume im Tauchkörper die aufsteigenden Gasblasen fest.

Gemäß einer bevorzugten Alternative bestehen die Einzelkörper aus porösem Ton. Es hat sich gezeigt, daß vorwiegend in dem Temperaturbereich zwischen 20 und 40 °C Schwermetalle aus dem Abwasser adsorbiert werden können. Die Schwermetalle difundieren hierbei ohne Schädigung der biologisch aktiven Bakterien durch den Biorasen auf den Füllkörpern und lagern sich im Porenvolumen des tonigen Materials an. Sobald die Schwermetall-Konzentration ausreichend hoch ist, werden die Einzelkörper des Tauchkörpers durch neue Einzelkörper ersetzt; die schwermetallhaltigen Einzelkörper werden deponiert.

Wie schon erwähnt, Können die Bedingungen im Klärbecken so eingestellt werden, daß die unteren Teile des Tauchkörpers aerob, die oberen Teile dagegen fakultativ bzw. anaerob betrieben werden. Gemäß einer bevorzugten Weiterbildung der Erfindung ist es jedoch auch möglich, die Verhältnisse umzudrehen. Hierzu wird gemäß einer vorteilhaften Weiterbildung der Erfindung der Tauchkörper in wenigstens zwei übereinanderliegende Teile aufgeteilt und die Sauerstoff liefernde Begasungsanlage im Zwischenraum zwischen den beiden Tauchkörperteilen angeordnet. Im unteren Bereich des Tauchkörpers herrscht Sauerstoffmangel, so daß dort Stickstoff-und Phosphat-Verbindungen anaerob abgebaut werden, während im oberen Bereich Sauerstoff-Überschuß herrscht, so daß dort die Kohlenstoffverbindungen aerob abgebaut werden.

Diese Möglichkeit der Kombination von aeroben und anaeroben bzw. fakultativen Bereichen in einem einzigen Behälter vermeidet die bisher übliche Kaskaden-Anordnung von zwei und mehreren Klärbehältern, die nicht nur teuer sondern auch steuerungsintensiv ist.

Um die Zustände im Belebungsbecken in unterschiedlichen Höhen messen zu können, ist vorzugsweise ein Sondenrohr mit wenigstens einer, vorzugsweise höhenverschieblichen Meßsonde vorgesehen. Das Sondenrohr ist vorzugsweise vielfach perforiert, damit das Meßergebnis, gemessen im Sondenrohr, möglichst genau übereinstimmt mit den tatsächlichen Verhältnissen im Abwasser.

Von herkömmlichen Tauchkörpern ist bekannt, daß sie nach einer Betriebszeit von meist 2 bis 3 Jahren zuwachsen und zwar durch Abwasserbestandteile, die hängenbleiben, und durch den Biorasen selbst. Die handelsüblichen Tauchkörper müssen dann ausgebaut und durch neue ersetzt werden. Der erfindungsgemäße Tauchkörper, der aus Einzelkörpern als Schüttgut besteht, kann in einfacher Weise ohne Demontage gereinigt werden. Hierzu ist vorzugsweise eine Lanze vorhanden; durch Einblasen von Gas bzw. Luft, gegebenenfalls auch von Wasser unter Druck, entsteht eine intensive Rück-und Freispülung, mit der alle unerwünschten Bestandteile beseitigt werden. Dabei kann die Kläranlage in Betrieb bleiben.

Gemäß einer bevorzugten Weiterbildung der Erfindung ist ein Steigrohr vorgesehen, das das Abwasser vom Boden des Behälters zum Abwasserspiegel fördert, von wo es -entgegen dem Luftstrom -durch den Tauchkörper zurückströmt.

Dieses Steigrohr kann im Innern des Behälters angeordnet sein und ist dann oben und unten offen. Diese Konstruktion zeichnet sich durch besondere Einfachheit und Kompaktheit aus.

Alternativ dazu kann das Steigrohr auch außerhalb des Behälters angeordnet sein. Es ist dann fest mit dem Boden des Behälters verbunden. In diesem Fall kann die Tauchkörperfläche noch größer gewählt werden.

Um die Strömung des Abwassers in Gang zu halten, ist im Steigrohr vorzugsweise eine Pumpe angeordnet. Diese Pumpe muß im wesentlichen nur die Strömungswiderstände des Abwassers im Tauchkörper überwinden.

Um eine gute Durchmischung zwischen frischem Abwasser und dem umgewälzten Behälterinhalt zu erreichen, mündet der Abwasserzulauf in das Steigrohr. Falls an oder neben dem Behälter ein Nachklärbecken angeordnet ist, wird man die Rückführleitung für den Bodenschlamm aus dem Nachklärbecken ebenfalls in das Steigrohr münden lassen.

Überwachung und Wartung der Kläranlage werden besonders vereinfacht und erleichtert durch einen Inspektionsschacht, der bis unter den Tauchkörper reicht und von dem aus alle Teile des Klärbehälters -Tauchkörper, Begasungsanlage, Meßsonden-Spüllanze -zugänglich sind.

Anhand der Zeichnung soll die Erfindung in Form von Ausführungsbeispielen näher erläutert werden. Es zeigen:

Fig. 1 einen Querschnitt durch einen Belebungsteil einer Kläranlage mit zentralem Steigrohr,

Fig. 2 einen Querschnitt durch eine Kläranlage mit Belebungsteil, zentralem Steigrohr und Nachklärbecken,

Fig. 3 einen Querschnitt durch den Belebungsteil einer Kläranlage mit externem Steigrohr und in Zonen unterteiltem Tauchkörper und

Fig. 4 einen Querschnitt durch eine weitere Ausführungsform eines Belebungsteils mit in Zonen unterteiltem Tauchkörper und einem Inspektionsschacht.

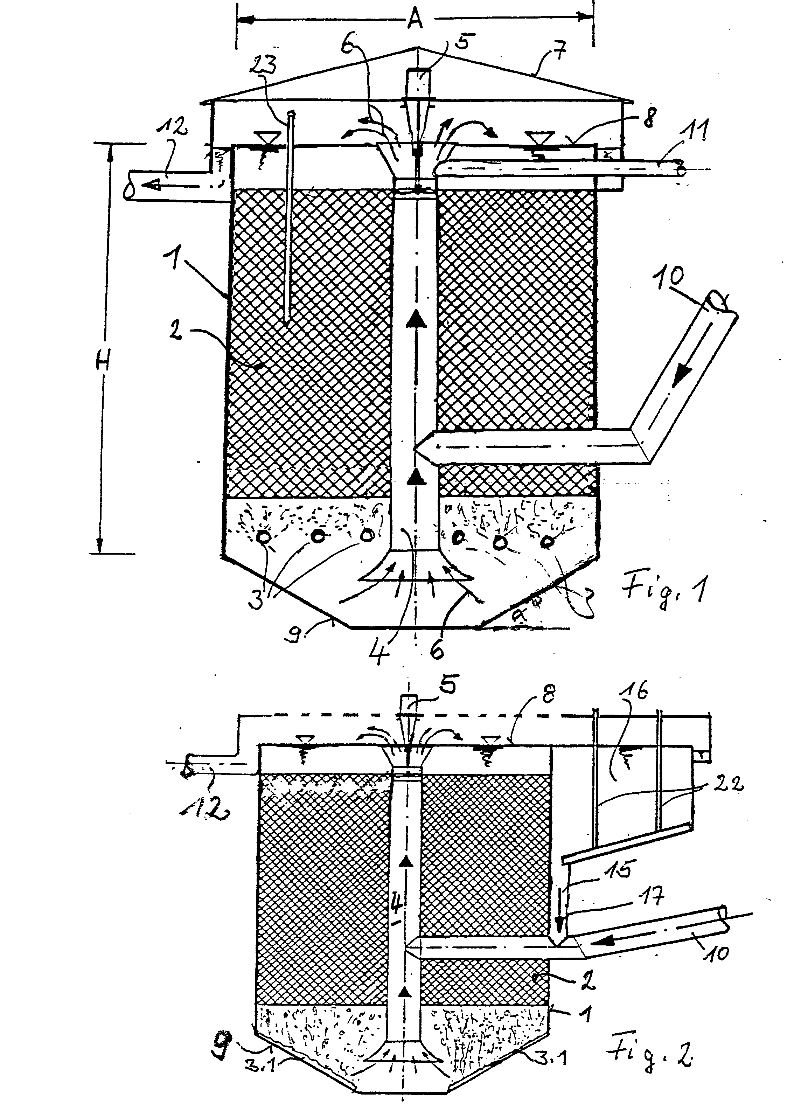

Fig. 1 zeigt einen Behälter (1) der das Belebungsbecken einer Kläranlage bildet, mit einem trichterförmigen Boden (9). Optimale Ergebnisse bei der Trennung von gereinigtem Abwasser und Schlamm ergeben sich bei einer Neigung des Behälterbodens zwischen 45° und 60°. Wählt man den Winkel flacher, besteht die Gefahr, daß sich zuviel Schlamm absetzt und in eine anaerobe Gärung übergeht; wählt man den Winkel zu steil, wird die Bautiefe unnötig groß.

Der Behälter (1) ist so ausgebildet, daß möglichst wenig der durch den biologischen Abbau gebildeten Wärme abgestrahlt wird. Hierzu sind im wesentlichen die Abmessungen, d. h. der Durchmesser (A) und die Höhe (H) so ausgebildet, daß die wärmeabgebende Oberfläche möglichst klein ist im Verhältnis zum Behältervolumen.

Im Inneren des Behälters (1) erkennt man einen Tauchkörper (2), der aus einer Vielzahl von Einzelkörpern, insbesondere von Kunststoffrohrprofilabschnitten, als Schüttgut besteht. Durch geeignete Gitter oder Lochbleche wird dafür gesorgt, daß die Oberfläche des Tauchkörpers (2) in ausreichendem Abstand unterhalb des Abwasserspiegels (8) bleibt, so daß sich in dem so gebildeten Stauraum oberhalb des Tauchkörpers (2) Abwasser und rückgespülter Schlamm ausreichend homogenisieren können.

Im Zentrum des Behälters (1) erkennt man ein Steigrohr (4), in das eine Axialpumpe (5) als Fördervorrichtung eingesetzt ist. Die Pumpe (5) erzeugt ein Druckgefälle, um die erforderliche Strömungsgeschwindigkeit des Abwassers im Behälter (1) zu erreichen. Außerdem sorgt die Pumpe (5) für eine zusätzliche Vermischung des umgewälzten Behälterinhaltes mit dem frischen, zu reinigenden Abwasser, welches über einen Abwasserzulauf (10) in das Steigrohr (4) eingeleitet wird. Überschüssiger Schlamm wird auf der Druckseite der Pumpe (5) über eine Leitung (11) abgezogen.

Die Strömungsgeschwindigkeit des Abwassers muß so hoch sein, daß im Tauchkörper (2) der erforderliche Spüleffekt erreicht wird, der das Zusetzen durch Abwasserbestandteile und Biorasen insbesondere in den unteren Tauchkörperschichten verhindert. Durch eine hohe Strömungsgeschwindigkeit werden aber auch permanent neue Näherstoffe an alle Flächen des Biorasens herangetragen, so daß dieser ein optimales Nährstoffangebot erhält.

Da das Abwasser nicht gehoben werden muß, ist die Leistungsaufnahme der Pumpe gering. Deshalb kann das Abwasser mehrfach, zwischen 2 bis 20 mal, durch den Tauchkörper (2) geleitet werden, bevor es nach 1 Stunde, maximal 1,5 Stunden, den Behälter (1) gereinigt verlassen kann.

Der für den aeroben Abbau erforderliche Sauerstoff wird mit Hilfe einer Druckbelüftungsanlage - (3) dem Tauchkörper (2) von unten zugeführt. Als Belüftungsanlage kommen die bekannten Vorrichtungen in Frage, die eine möglichst feine Gasblasenbildung ermöglichen, wobei ein unnötiger Auftrieb möglichst vermieden wird, indem Druck und Geschwindigkeit, mit dem das Gas in das Abwasser eingeblasen wird, möglichst gering gehalten werden. Die Gasblasen sind infolge ihres Auftriebs bestrebt, durch den Tauchkörper (2) hindurch zur Wasseroberfläche (8) zu steigen. Die Steiggeschwindigkeit wird jedoch gebremst durch die entgegengerichtete Strömung des Abwassers und durch den Strömungswiderstand im Tauchkörper - (2). Eine zusätzliche Erhöhung der Verweilzeit der Gasblasen entsteht durch Adsorbtion an der Oberfläche des Biorasens und durch Hohlräume in bzw. zwischen den regellos aufgeschütteten Einzelkörpern, sowie gegebenenfalls durch eine erzwungene Rotation des Behälterinhalts.

Das gereinigte Abwasser wird in üblicher Weise mit Hilfe einer Überfallkante vom ungereinigten Wasser im Behälter (1) getrennt und über einen Ablauf (12) einem Nachklärbecken zugeführt.

Um die Wärmeabgabe bei Bedarf weiter verringern zu können, kann ein Deckel (7) auf den Behälter (1) aufgesetzt werden. Außerdem besteht die Möglichkeit, die Behälterwandungen zusätzlich wärmedämmend auszurüsten, falls die Wärmekonzentrierung durch die Dimensionierung und insbesondere durch den Tauchkörper (2) nicht ausreichen sollte. Anzustreben ist eine Wärmedämmung, die es ermöglicht, den Behälterinhalt auf 35 bis 40 °C zu erwärmen.

Zur Reinigung des Tauchkörpers (2) ist eine Lanze (23) eingebaut, die höhen-und seitenverstellbar ist. Mit Druckluft und/oder -wasser wird der verstopfte Tauchkörper (2) intensiv gereinigt, ohne daß die Einzelkörper dabei beschädigt werden.

Durch eine gezielte Steuerung des Verhältnisses von Luftversorgung, Strömungsgeschwindigkeit des Abwassers, Strömungswiderstand des Tauchkörpers und gegebenenfalls Rotation des Behälterinhaltes kann erreicht werden, daß nur im unteren Teil des Tauchkörpers aerobe Verhältnisse herrschen. Beim Durchströmen der Luftblasen wird deren Sauerstoff verbraucht, so daß im oberen Bereich des Tauchkörpers (2) eine sauerstoffarme oder gar sauerstofffreie Zone entsteht, in der fakultative bzw. anaerobe Bedingungen herrschen. Dadurch kann im aeroben unteren Bereich volle Nitrifikation und im oberen anaeroben Bereich volle Denitrifikation, d. h. Aufspaltung der Stickstoff-Verbindungen und Ausscheidung des Stickstoffes als Gas erreicht werden.

Durch geeignete Steuermaßnahmen kann auf diese Weise auch ein Abbau der Phosphat-Verbindungen erreicht werden, so daß der bei den bisherigen Kläranlagen nachteilige Einfluß der Phosphate auf den Vorfluter verringert oder ganz vermieden wird.

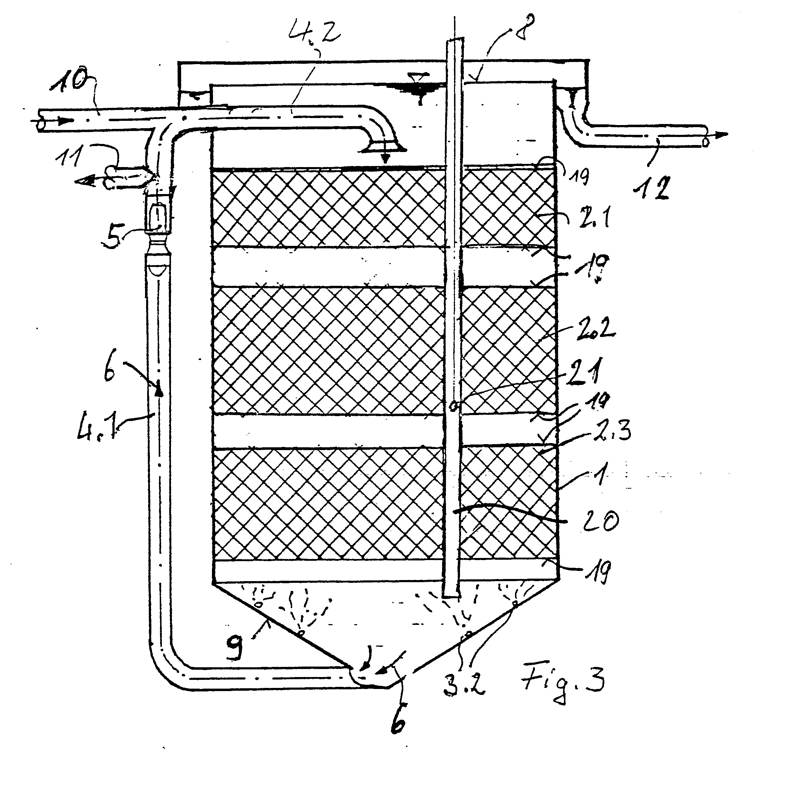

In Fig. 2 erkennt man auf der rechten Seite des Behälters (1) ein Nachklärbecken (16), welches sich ringförmig um den Behälter (1) erstrecken kann. Der sich auf dem Boden des Nachklärbeckens (16) absetzende Bodenschlamm (15) wird mit Hilfe eines Räumgerätes (22) in eine Rinne, über eine Schlammrückführleitung (17) in das Abwasser-Zulaufrohr (10) und über dieses in das Steigrohr (4) geleitet, und so dem Abwasserabbau wieder zugeführt.

Im Bereich des Bodens (9) erkennt man eine Ausführung der Belüftungsanlage (3.1) als Schlitzkasten für eine besonders druckarme, breitflächige Gasblasenbildung.

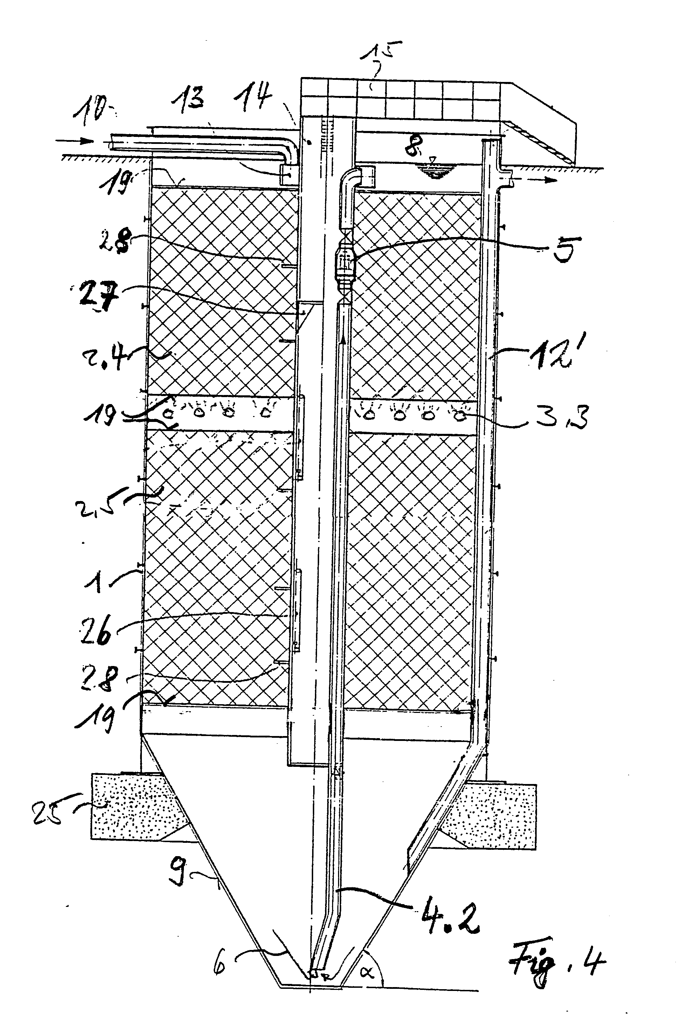

Fig.3 zeigt eine Ausführungsform des Belebungsbehälters, bei der sich ein Steigrohr (4.1) außerhalb des Behälters (1) befindet. Auch hier wird mit Hilfe einer Axialpumpe (5) das sich am trichterförmigen Boden (9) sammelnde Abwasser - (6) so umgepumpt, daß es im Inneren des Tauchkörpers (2) den aufsteigenden Gasblasen aus der Belüftungseinrichtung (3.2) entgegenströmt. Der waagerecht verlaufende Teil (4.2) des Steigrohrs (4.1) befindet sich unterhalb des Abwasserspiegels (8), so daß die geodätische Förderhöhe gleich Null ist. Dadurch können die Pumpleistung und damit die Betriebskosten der Anlage klein gehalten werden.

Um den Zustand der Anlage im Inneren des Behälters (1) messen zu können, ist ein Sondenrohr (20) vorgesehen, in dem eine oder mehrere Meßsonden (21) höhenverschiebbar angeordnet ist. Die Meßsonde (21) mißt beispielsweise den Sauerstoff-oder den Nitratgehalt, die Temperatur usw. Mit Hilfe der Meßergebnisse können die Betriebsparameter beeinflußt werden, beispielsweise die Leistung der Pumpe (5), die Menge des jeweils zulaufenden, zu reinigenden Abwassers, die Gasmenge, die Wärmeabgabe durch Öffnen und Schließen eines Behälterdeckels usw.

Mit Hilfe der Meßsonde läßt sich auch feststellen, ob der Tauchkörper (2) schon so verstopft bzw. zugewachsen ist, daß die Klärleistung absinkt. Sobald ein solcher Zustand erkannt wird, wird die Spüllanze (23) aktiviert. Mit Hilfe von Druckgas und/oder -wasser wird ein intensiver Reinigungs- und Spüleffekt erzielt, so daß der Tauchkörper in kürzester Zeit wieder gesäubert ist. Der Klärbetrieb muß dabei nicht unterbrochen werden.

Eine Besonderheit ist die Aufteilung des Tauchkörpers (2) in drei voneinander abgegrenzte Zonen(2.1, 2.2, 2.3). Durch geeignete Maßnahmen, wie gesonderte Gaszuführung, Strömungsführung usw. lassen sich in jeder Zone optimale Bedingungen für eine spezielle Bakterienart einstellen, z. B. aerobe, fakultative und anaerobe Bakterien.

Fig. 4 schließlich zeigt eine weitere Ausführungsform. Der Behälter (1) steht auf einem Betonfundament (25). Der Tauchkörper (2) ist in zwei übereinander angeordnete Tauchkörperteile (2.4, 2.5) aufgeteilt. Zwischen den beiden Tauchkörperteilen (2.4, 2.5) ist die Begasungsanlage (3.3) angeordnet. Dadurch herrschen im oberen Tauchkörperteil (2.4) aerobe Bedingungen für eine Nitrifikation der biologisch abbaubaren Anteile im Abwasser. Im unteren Tauchkörperteil (2.5) dagegen herrscht Sauerstoffarmut, so daß dort die Stickstoff-und Phosphat-Verbindungen abgebaut werden. Damit erfolgen beide Prozesse simultan in einem einzigen Behälter (1), wodurch eine teure und steuerungsaufwendige Kaskadenschaltung von zwei oder mehreren getrennten Klärbecken vermieden wird.

Der Abzug des gereinigten Wassers erfolgt nicht wie üblich mit Hilfe einer Überfallkante im Bereich des Abwasserspiegels (8), sondern durch eine gesonderte Ablaufleitung (12'), deren Eintrittsöffnung unterhalb des Tauchkörpers (2) im Bereich des trichterförmigen Bodens (9) liegt. Auf diese Weise wird erreicht, daß das über die Leitung (10) zugeführte Abwasser den Tauchkörper (2) mindestens einmal durchströmt haben muß, bevor es über die Ablaufleitung (12') abgezogen wird. Auf diese Weise wird verhindert, daß beispielsweise bei Spitzenbelastungen ein Teil des ungereinigten Abwassers sozusagen im Kurzschluß über die Überfallkante zum Ablauf gelangen kann.

Eine Besonderheit, die Wartung und Betrieb der Kläranlage erheblich vereinfacht und erleichtert, besteht in der Anordnung eines zentralen Inspektionsschachtes (14). Dieser reicht bis unter den Tauchkörper (2), so daß alle Teile der Anlage zugänglich sind, ohne daß Ausbauten erforderlich sind.

Im Inspektionsschacht (14) liegen auch die Umwälzleitung (4.2), die Pumpe (5) und gegebenenfalls eine Entwässerungspumpe, so daß auch diese Aggregate ständig gewartet werden können.

Vom Inspektionsschacht (14) aus können auch mehrere Meßsonden (28) im Behälter verteilt angeordnet werden, um den Zustand des Tauchkörpers und den Ablauf der biologischen Prozesse in den verschiedenen Schichten des Tauchkörpers messen und gegebenenfalls steuern zu können.

Ferner ist es möglich, im Inspektionsschacht (14) einen Aufzug (27), eine Be-und Entlüftungsanlage (26) usw. anzuordnen. Zugänglich ist der Inspektionsschacht (14) über eine Brücke (15).

Wie schon erwähnt bestehen die Einzelkörper,mit denen der Tauchkörper (2) gefüllt ist, beispielsweise aus Kunststoffrohrprofilabschnitten als Schüttgut. Dieses Material ist preiswert und bietet den den Abbau bewirkenden Bakterien eine günstige Aufwuchsfläche.

Verwendet man jedoch Einzelkörper aus tonigem Material, so können vorwiegend in einem Temperaturbereich zwischen 20 und 40 °C auch Schwermetalle aus dem Abwasser adsorbiert werden. Die Schwermetall diffundieren hierbei ohne Schädigung der Bakteriensubstanz durch den Bewuchs der Füllkörper und lagern sich im Porenvolumen an. Dadurch ist eine sehr vorteilhafte Fixierung der Schwermetallgehalte aus dem Abwasser in den Füllkörpern möglich. Sobald die Konzentration ausreichend hoch ist, werden die Füllkörper gegen neue ausgetauscht und beispielsweise auf einer geeigneten Deponie abgelagert.

Die mit einer Versuchsanlage durchgeführten Untersuchungen haben gezeigt, daß die Abbauleistung größer als 90 % ist, wobei sich Aufenthaltszeiten des Abwassers unter 1,5 Stunden, vorzugsweise unter 1,0 Stunden ergeben. Die Füllkörper bestanden aus Kunststoffelementen mit einer spezifischen Oberfläche von größer 300 m²/m³. Die Förderleistung der Pumpe wurde so eingestellt, daß sich bei den angegebenen Aufenthaltszeiten ein Durchsatz von größer als 2 tw (tw = Trockenwetterabfluß) bis maximal ca. 20 tw erreicht wurde. Dabei konnte eine Temperaturerhöhung von bis zu 25 °C über die Zulauftemperatur des Abwassers erreicht werden. Die sich unter diesen Bedingungen im Behälter bildende Biozönose konnte auch toxische Stoffe, Maschinenöl, Schwermetalle, Stickstoffverbindungen usw. abbauen, ohne Schaden zu nehmen.

Es kann erwartet werden, daß durch eine Optimierung des Verfahrensablaufs und der Betriebsparameter mit Hilfe der mit der Meßsonde gemessenen Werte die Klärwirkung noch weiter gesteigert werden kann, und zwar auf eine Kapazität von ca. 1 EW pro Liter Füllkörper, gegenüber einer Kapazität herkömmlicher Tropfkörperanlagen von 0,05 EW pro Liter Füllkörper.

**Ansprüche**

1. Verfahren zur aeroben, fakultativen und/oder anaeroben Reinigung organischer Abwässer durch Heranführen von Abwasser und gegebenenfalls Sauerstoff enthaltendem Gas an geeignete Bakterien, die auf einer Aufwuchsfläche (2) im Belebungsteil einer Kläranlage fixiert sind, dadurch gekennzeichnet, daß Abwasser und Gas im Bereich der Aufwuchsfläche (2) einander entgegenströmen.

2. Verfahren nach Anspruch 1, dadurch gekennzeichnet, daß das Abwasser mehrfach an der Aufwuchsfläche (2) vorbeiströmt, bevor es den Belebungsteil gereinigt verläßt, und daß der Durchsatz des Abwassers zwischen 2 und 20 tw (tw = Trockenwetterabfluß) und die Verweilzeit des Abwassers im Belebungsteil kleiner als 1,5, vorzugsweise kleiner als 1,0 Stunden gehalten werden.

3. Verfahren nach Anspruch 1 oder 2, dadurch gekennzeichnet, daß die Strömungsgeschwindigkeiten von Abwasser und Gas so eingestellt werden, daß der obere Teil (2.1) der Aufwuchsfläche (2) keinen Sauerstoff mehr erhält.

4. Verfahren nach Anspruch 1, 2 oder 3, dadurch gekennzeichnet, daß das Gas nur mit geringem Druck in das Abwasser eingeblasen wird.

5. Verfahren nach wenigstens einem der Ansprüche 1 bis 4, dadurch gekennzeichnet, daß das Abwasser durch die beim biologischen Abbau entstehende Wärme aufgeheizt wird, vorzugsweise auf 35 -40 °C.

6. Kläranlage zur aeroben, fakultativen und/oder anaeroben Reinigung organischer Abwässer aus Haushalt, Gewerbe und/oder Industrie, die gegebenenfalls sogenannte Sekundärverschmutzer enthalten, nach dem Verfahren der Ansprüche 1 bis 5, enthaltend einen Behälter (1) für das zu reinigende Abwasser, einen Zulauf (10) für das Abwasser, einen Ablauf (12) für das gereinigte Abwasser, einen Abzug (11) für den Überschußschlamm, einen Tauchkörper (2) als Aufwuchsfläche für sessile Mikroorganismen, und eine Begasungsanlage (3) zum Einbringen von Gas -Luft und gegebenenfalls Sauerstoff -in den Behälter (1), dadurch gekennzeichnet, daß der Behälter (1) auf geringen Wärmeverlust dimensioniert ist, daß sein Boden - (9) trichterförmig ausgebildet ist, daß eine Umwälzleitung (4) mit einer Fördervorrichtung (5) vorgesehen ist, mit der der Behälterinhalt vom Boden (9) zum Abwasserspiegel (8) gepumpt wird, von wo er dem Gas entgegen durch den Tauchkörper (2) strömt, und daß der Zulauf (10) für das zu reinigende Abwasser und die Umwälzleitung (4) oberhalb des Tauchkörpers (2) münden, so daß sich beide Medien vermischen und über den Tauchkörper (2) verteilen.

7. Kläranlage nach Anspruch 6, dadurch gekennzeichnet, daß der Tauchkörper (2) aus einer Vielzahl von Einzelkörpern als Schüttgut besteht, die eine große Oberfläche und/oder offene Hohlräume besitzen und zwischen Gittern bzw. Lochblechen - (19) eingeschlossen sind.

8. Kläranlage nach Anspruch 7, dadurch gekennzeichnet, daß die Einzelkörper aus Abschnitten von rohrförmigen Kunststoffprofilen bestehen, die vorzugsweise schwimmfähig sind.

9. Kläranlage nach Anspruch 7, dadurch gekennzeichnet, daß die Einzelkörper aus porösem Ton bestehen.

10. Kläranlage nach wenigstens einem der Ansprüche 6 bis 9, dadurch gekennzeichnet, daß der Tauchkörper (2) in übereinander angeordnete Teilkörper (2.4, 2.5) aufgeteilt ist und daß sich die Begasungsanlage (3) zwischen zwei Tauchkörperteilen (2.4, 2.5) befindet.

11. Kläranlage nach wenigstens einem der Ansprüche 6 bis 10, dadurch gekennzeichnet, daß wenigstens eine Lanze (23) eingebaut ist, mit der Tauchkörper (2) mittels Druckluft und/oder Druckwasser freispülbar ist.

12. Kläranlage nach wenigstens einem der Ansprüche 6 bis 11, dadurch gekennzeichnet, daß die Gasaustrittsöffnungen der Begasungsanlage (3) seitlich ausgerichtet sind, so daß das Abwasser im Behälter (1) in Rotation gehalten wird.

13. Kläranlage nach wenigstens einem der Ansprüche 6 bis 12, dadurch gekennzeichnet, daß ein Steigrohr (4, 4.1) vorzugsweise mit einer Umwälzpumpe (5) vorgesehen ist, das das Abwasser (6) vom Boden (9) des Behälters (1) zum Abwasserspiegel (8) fördert.

14. Kläranlage nach wenigstens einem der Ansprüche 7 bis 13, dadurch gekennzeichnet, daß ein Sondenrohr (20) mit wenigstens einer, vorzugsweise höhenverschieblichen, Meßsonde (21) vorgesehen ist.

15. Kläranlage nach wenigstens einem der Ansprüche 6 bis 14, dadurch gekennzeichnet, daß die Wände des Behälters (1) wärmegedämmt sind und der Behälter (1) vorzugsweise mit einem Deckel (7) abdeckbar ist.

16. Kläranlage nach wenigstens einem der Ansprüche 6 bis 15, dadurch gekennzeichnet, daß ein Inspektionsschacht (14) vorgesehen ist, der bis unter den Tauchkörper (2) bzw. die Begasungsvorrichtung (3) reicht und daß von diesem Schacht (14) aus alle Teile der Kläranlage zugänglich sind.

Fig. 1

Fig. 2

0 201 924

Fig. 3

Fig. 4